# EUROPÄISCHE PATENTANMELDUNG

(11) **EP 4 053 038 A1**
(43) Veröffentlichungstag der Anmeldung: **07.09.2022**
(21) Anmeldenummer: 21161097.7
(22) Anmeldetag: 05.03.2021
(51) Int. Cl.: B65D 65/46, A47J 31/40, B65D 85/804

(54) **BIOLOGISCH ABBAUBARE PORTIONENKAPSEL**

(71) Anmelder: Tchibo GmbH, 22297 Hamburg (DE)
(72) Erfinder: Kuhl, Norbert, 5020 Salzburg (AT)
(74) Vertreter: Frei Patent Attorneys

(57) **Zusammenfassung**

Die Erfindung ist auf dem Gebiet der Vorrichtungen und Verfahren zum Zubereiten von Getränken, insbesondere Kaffee, unter Verwendung einer Portionenkapsel angesiedelt und betrifft eine Portionenkapsel, eine auf die Portionenkapsel abgestimmte Getränkezubereitungsmaschine sowie ein Verfahren zum Betrieb einer Getränkezubereitungsmaschine unter Verwendung der Portionenkapsel. Eine erfindungsgemässe Portionenkapsel umfasst eine umlaufenden Seitenwand 3, ein erstes Deckelement 4 und ein zweites Deckelement 8, wobei die umlaufende Seitenwand 3, das erste Deckelement 4 und das zweite Deckelement 8 einen geschlossenen Innenraum 7 bilden. Das erste Deckelement 4 oder das zweite Deckelement 8 weist eine in den Innenraum 7 gerichtete Wölbung 15 auf. Zumindest das die Wölbung 15 aufweisende Deckelement ist aus einem biologisch abbaubaren Material gefertigt.

## Beschreibung

Die Erfindung ist auf dem Gebiet der Vorrichtungen und Verfahren zum Zubereiten von Getränken mittels in eine Getränkekapsel eingeführter Flüssigkeit angesiedelt, wobei die Getränkekapsel eine lösliche Nahrungsmittelsubstanz enthält, aus welcher durch Einspritzen von Wasser ein Getränk oder Getränkebestandteil zubereitet werden kann. Die Erfindung ist insbesondere auf dem Gebiet der Zubereitung von Kaffee unter Verwendung einer Kaffeekapsel angesiedelt. Die Erfindung betrifft insbesondere eine Portionenkapsel, eine auf die erfindungsgemässe Portionenkapsel abgestimmte Getränkezubereitungsmaschine sowie ein Verfahren zum Betrieb einer Getränkezubereitungsmaschine unter Verwendung einer erfindungsgemässen Portionenkapsel.

Unter den Systemen zum Zubereiten von Getränken sind die sogenannten Kaffeekapselsysteme (es gibt sie auch in Varianten zur Zubereitung von Tee) bekannt, bei denen im Allgemeinen heisses Wasser meist unter Druck in eine Kapsel eingeführt wird, um durch Extraktion ein Kaffee- oder Teegetränk zuzubereiten. Für das Einführen des heissen Wassers wird die Kapsel oft auf der einen Seite (Inj ektionsseite) angestochen. Für das Ausleiten des gebrühten Getränks, im Allgemeinen auf der anderen Seite der Kapsel (der Extraktionsseite) sind verschiedene Möglichkeiten bekannt. Einerseits gibt es Systeme, bei denen auch extraktionsseitig ein Anstechen durch entsprechende Perforationsdorne vorgesehen ist. Anderseits sind Systeme bekannt, bei denen eine extraktionsseitige Begrenzung der Kapsel unter dem Innendruck während des Brühprozesses angestochen oder angerissen wird, wofür ein kapsel externes (in der Brühkammer der entsprechenden Kaffeemaschine vorhandenes) oder ein kapselinternes Mittel vorhanden sein kann. Schliesslich gibt es auch Kapseln, die bereits geöffnet sind, bei denen also keine Kapselwandung/Membran angestochen oder angerissen werden muss um das Getränk auszuleiten.

Am weitesten verbreitet sind Kapseln aus Materialien, die weder biologisch abbaubar sind noch aus erneuerbaren Rohstoffen bestehen. Die Kapseln bestehen zu einem hohen Anteil beispielsweise aus Aluminium oder aus Kunststoff, beispielsweise Polypropylen (PP). Solche Kapseln können sowohl für die Lagerung (z.B. Dichtigkeit, insbesondere Luft-/Sauerstoff-Undurchlässigkeit) als auch für die Anwendung (z.B. Wärmeformbeständigkeit, Anstechverhalten etc.) vorteilhafte Eigenschaften haben. Ein grosser Nachteil dieser Kapseln ist der nach der Verwendung anfallende Abfall beziehungsweise der nötige hohe Aufwand zur Wiederverwertung der in den Kapseln verwendeten Materialien. Letzterer umfasst das Einsammeln der in der Regel im privaten Bereich verwendenden Kapseln, der Transport derselben zu RecyclingAnlagen und den Wiederaufbereitungsprozess selbst. In anderen Worten, selbst für die Wiederverwertung müssen beachtliche Ressourcen (Zeit, Energie, aber auch Transportkosten) aufgewendet werden, die wiederum die Umwelt belasten können (z.B. CO₂-Emissionen bei Transport und zur Gewinnung der bei der Wiederaufbereitung nötigen Energie). Ferner geht auch bei der Wiederaufbereitung das in der Kapsel enthaltene Extraktionsgut in der Regel verloren.

Die Verwendung von weniger ressourcenintensiven Materialien für Portionenkapseln ist an sich bekannt. Insbesondere ist der Einsatz von Bio-Kunststoffen diskutiert worden. Als solche werden einerseits Kunststoffe bezeichnet, die aus einem nachwachsenden Rohstoff gefertigt sind (sogenannte biobasierte Kunststoffe). Anderseits sind Bio-Kunststoffe Kunststoffe, die biologisch abbaubar sind (sogenannt bioabbaubare Kunststoffe).

Im vorliegenden Text bedeutet "bioabbaubar" biologisch abbaubar gemäss der Norm EN13432 (Stand: Ende 2019), und "biobasiert" bedeutet "aus nachwachsenden Rohstoffen, nicht auf fossiler Basis gefertigt".

Neben dem Einsatz von bioabbaubaren und/oder biobasierten Kunststoffen wurden und werden in der Verpackungsindustrie Verbundwerkstoffe entwickelt, die bioabbaubar und/oder biobasiert sind und einen Anteil von biobasierten Zusätzen aufweisen. Dabei bildet ein bioabbaubarer und/oder biobasierter Kunststoff in der Regel die Kunststoffkomponente (auch Kunststoffmatrix genannt) und ein biobasierter Zusatz bildet den Füllstoff.

US 2018/0127554 A1, US 2012/0071591 A1 und J Mater Sci (2018) 53:10920-10932 geben einen Überblick über solche Verbundwerkstoffe, die unter anderem für einen Einsatz bei Verpackungen in der Lebensmittelindustrie in Frage kommen. In der Regel bilden Bio-Kunststoffe wie beispielsweise Polylactid (PLA), Polybutylenadipatterephthalta (PBAT), Polybutylensuccinat (PBS) und Polybutylensuccinat-Adipat (PBSA) die Kunststoffkomponente während diverse biobasierte Füllstoffe diskutiert werden.

Alternativ zu Bio-Kunststoffen und den erwähnten Verbundwerkstoffen, bei denen ein Bio-Kunststoff beispielsweise in Kombination mit einem biobasierten Füllstoff verwendet wird, wurde der Einsatz von Verpackungen vorgeschlagen, die vollständig oder grösstenteils aus einem biobasierten Material bestehen. Beispielsweise lehrt WO 2015/170358 A2 den Einsatz von Materialien, die aus Holz gewonnen wurden, für Behälter und Kapseln.

Es hat sich gezeigt, dass die oben erwähnten Bio-Kunststoffe, Verbundwerkstoffe und biobasierten Materialen nur bedingt für einen Einsatz in Portionenkapseln in Frage kommen. Ein Nachteil der erwähnten Bio-Kunststoffe, Verbundwerkstoffe und biobasierten Materialen liegt darin, dass diese physikalischen Eigenschaften aufweisen, beispielsweise Dichtigkeit, insbesondere Luft-/Sauerstoff-Undurchlässigkeit), Wärmeformbeständigkeit, Steifheit oder Sprödigkeit (Anstechverhalten), die für einen Einsatz in Portionenkapseln und dem damit einhergehenden Zubereitungsprozess ungeeignet sind. Insbesondere sind sie in Bezug auf die physikalischen Eigenschaften und mit Blick auf eine Verwendung in Portionenkapseln und dem damit einhergehenden Zubereitungsprozess anderen Material unterlegen. Ein Einstellen der physikalischen Eigenschaften der Bio-Kunststoffe, Verbundwerkstoffe und biobasierten Materialien auf einen Einsatz in Portionenkapseln würde - falls ein solches Einstellen überhaupt möglich sein sollte - dazu führen, dass das Basismaterial der Portionenkapsel, das heisst der verwendete Bio-Kunststoff, der verwendete Verbundwerkstoff oder das verwendete biobasierte Material, in der Herstellung aufwendig und teuer werden würde.

Beispielsweise lehrt WO 2017/186743 A1 die Verwendung eines Bio-Werkstoffs unter anderem für Kaffee- und Teekapseln, wobei der Bio-Werkstoff einen biologisch abbaubaren Kunststoff und Sonnenblumenkernschalen bzw. Sonnenblumenkernhülsen umfasst. Die Sonnenblumenkernschalen bzw. Sonnenblumenkernhülsen müssen vor der Compoundierung mit dem biologisch abbaubaren Kunststoff aufbereitet werden. Insbesondere sind neben der eigentlichen Gewinnung der Sonnenblumenkernschalen bzw. Sonnenblumenkernhülsen, eine Zerkleinerung, Trocknung und Entölung nötig. Gemäss der Lehre von WO 2017/186743 A1 weist der besagte Bio-Werkstoff physikalische Eigenschaften auf, die diesen für einen Einsatz insbesondere in Kaffeekapseln oder Teekapseln, besser eigenen als andere biologisch abbaubare Kunststoffe.

Andere Ansätze gemäss dem Stand der Technik zielen darauf ab, die oben genannten, aus den physikalischen Eigenschaften der Bio-Kunststoffe, Verbundwerkstoffe und biobasierten Materialien resultierenden Nachteile auf andere Weise, das heisst nicht über das Einstellen der Eigenschaften, aufzulösen, um diese Materialien dennoch in Portionenkapseln verwenden zu können. Diese Ansätze erhöhen den Aufwand zur Herstellung der Portionenkapsel in der Regel erheblich.

DE 202016104950 U1 lehrt eine hermetisch verschliessbare Portionspackung oder einen hermetisch verschliessbaren Portionsbeutel mit einer biologisch abbaubaren Kapsel oder einem biologisch abbaubaren Pad, wobei die Portionspackung oder der Portionsbeutel vollständig aus biologisch abbaubarem Material besteht. Die Packung, beziehungsweise der Beutel, umfasst zwei miteinander verbundene Folien, um die physikalischen Eigenschaften näher an die Bedürfnisse im Umfeld von Portionenkapseln zu bringen. In anderen Worten werden die mit Blick auf einen Einsatz bei Portionenkapseln den Bio-Kunststoffen, Verbundwerkstoffen und biobasierten Materialien inne liegenden Nachteile etwas entschärft, indem die Portionenkapsel in eine Mehrschichtigen Packung, beziehungsweise einen mehrschichtigen Beutel, eingebracht wird, wobei die Schichten dafür sorgen, dass das Gesamtsystem "Packung/Beutel und Portionenkapsel", Eigenschaften aufweisen, die einen Einsatz auf dem Gebiet der Getränkezubereitung zulassen.

WO 2011/015973 A1 lehrt eine Kapsel, die vollständig aus biologisch abbaubarem Material besteht, wobei die Realisierung der die Kapsel verschliessenden Membran im Vordergrund der Lehre von WO 2011/015973 A1 steht. Die Membran wird durch ein zusätzliches Element verstärkt, um einen Einsatz des verwendeten biologisch abbaubaren Materials auf dem Gebiet der Getränkezubereitung zulassen.

Es ist eine Aufgabe der vorliegenden Erfindung, einen oder mehrere der oben genannten Nachteile bei Portionenkapseln gemäss dem Stand der Technik zu vermindern.

Insbesondere ist es eine Aufgabe der Erfindung, eine Portionenkapsel aus einem biologisch abbaubaren Basismaterial zur Verfügung zu stellen, die sowohl von den physikalischen Eigenschaften als auch von der Herstellung her mit Portionenkapseln aus anderen Materialien besser konkurrieren kann. Die "anderen" Materialien können insbesondere
- nicht biologisch abbaubar sein oder zu einem grossen Anteil nicht biologisch abbaubar sein; und/oder
- von der Materialerzeugung her aufwändiger sein; und/oder
- derart sein, dass für einen Einsatz bei Portionenkapseln nachteilige Eigenschaften über zusätzliche Elemente der Portionenkapsel oder über Elemente, die zur Portionenkapsel zusätzlich sind, kompensiert werden. Das heisst, dass die "anderen" Materialien derart sein können, dass die Kapselherstellung aufwändiger wird.

Insbesondere ist es eine Aufgabe der Erfindung, eine Portionenkapsel aus einem Basismaterial zur Verfügung zu stellen, die in einer Gesamtbetrachtung, welche physikalische Eigenschaften und Aufwand bei der Herstellung umfasst, besser abschneidet als Portionenkapseln aus biologisch abbaubarem Material gemäss dem Stand der Technik.

Es ist ferner eine Aufgabe der Erfindung eine auf die erfindungsgemässe Portionenkapsel abgestimmte Getränkezubereitungsmaschine sowie ein Verfahren zum Betrieb einer Getränkezubereitungsmaschine unter Verwendung einer erfindungsgemässen Portionenkapsel zur Verfügung zu stellen.

Ein Nachteil, der den Einsatz vieler biologisch abbaubarer Materialien, beispielsweise den oben genannten Bio-Kunststoffen, Verbundwerkstoffen und biobasierten Materialen, in Portionenkapseln für die Getränkezubereitung verhindert, ist ihr Anstechverhalten während des Zubereitungsprozesses. Insbesondere dieser Nachteil wird durch eine erfindungsgemässe Portionenkapsel reduziert.

Viele biologisch abbaubare Materialien sind im Vergleich zu anderen, bei Portionenkapseln verwendeten Materialien, beispielsweise Aluminium, spröde. Dies führt dazu, dass die Portionenkapseln durch die injektionsseitige Anstechvorrichtung und/oder extraktionsseitige Anstechvorrichtung vorzeitig, das heisst innerhalb des Zubereitungsprozesses zu früh, insbesondere bevor der zur gewünschten Extraktion nötige Wasserdruck und/oder die zur gewünschten Extraktion nötige Temperatur anliegt, angestochen werden.

Im Gegensatz zu Ansätzen gemäss dem Stand der Technik, beispielsweise WO 2017/186743 A1 oder das sich nicht auf Portionenkapseln beziehende Dokument US 2018/0127554 A1, werden die in Bezug auf das Anstechverhalten problematischen physikalischen Eigenschaften vieler biologisch abbaubarer Materialien gemäss der vorliegenden Erfindung nicht oder nicht nur durch ein entsprechendes Einstellen der Materialien über ihre Zusammensetzung angegangen, sondern über die Form und das Verhalten von Teilen der Portionenkapsel während des Zubereitungsprozesses. In anderen Worten weist die erfindungsgemässe Portionenkapsel strukturelle Merkmale auf, die Nachteile der Verwendung von biologisch abbaubaren Materialein für Portionenkapseln reduzieren.

Eine erfindungsgemässe Portionenkapsel weist eine umlaufenden Seitenwand, ein erstes Deckelement und ein zweites Deckelement auf, wobei die umlaufende Seitenwand, das erste Deckelement und das zweite Deckelement derart zueinander angeordnet sind, dass ein geschlossener Innenraum gebildet wird.

Das erste Deckelement oder das zweite Deckelement weist eine in den Innenraum gerichtete Wölbung auf, wobei das die Wölbung aufweisende Deckelement aus einem biologisch abbaubaren Material gefertigt ist.

In einer Ausführungsform weisen beide Deckelemente eine Wölbung in einer der Nachfolgend beschriebenen Ausführungsformen auf. Entsprechend können auch beide Deckelemente aus einem biologisch abbaubaren Material gefertigt sein.

In einer Ausführungsform ist das die Wölbung aufweisende Deckelement und die umlaufende Seitenwand aus einem biologisch abbaubaren Material fertigt.

Insbesondere kann das die Wölbung aufweisende Deckelement und die umlaufende Seitenwand aus demselben biologisch abbaubaren Material gefertigt sein. Dies kann insbesondere dann der Fall sein, wenn besagtes Deckelement und die umlaufende Seitenwand das nachfolgend beschriebene Basiselement bilden.

In einer Ausführungsform ist das erste Deckelement, das zweite Deckelement und die umlaufende Seitenwand aus einem biologisch abbaubaren Material, insbesondere aus demselben biologisch abbaubaren Material gefertigt. Optional können weitere Elemente der Portionenkapsel, beispielsweise das nachfolgend beschriebene Filterelement, aus einem biologisch abbaubaren Material gefertigt sein.

In einer Ausführungsform ist die gesamte Portionenkapsel aus einem biologisch abbaubaren Material gefertigt. Optional kann die gesamte Portionenkapsel aus demselben biologisch abbaubaren Material gefertigt sein.

In der Regel ist das erste Deckelement ein Bodenelement und das zweite Deckelement ist ein Deckelelement der Portionenkapsel oder umgekehrt.

In vielen Ausführungsformen bilden die umlaufende Seitenwand und eines der beiden Deckelemente, beispielsweise das erste Deckelement, insbesondere wenn es ein Bodenelement ist, ein Basiselement der Portionenkapsel. In anderen Worten weist die Portionenkapsel ein Basiselement auf, das die umlaufende Seitenwand und eines der beiden Deckelemente umfasst.

Das andere der beiden Deckelemente, beispielsweise das zweite Deckelement, insbesondere wenn es ein Deckelelement ist, ist dann am Basiselement so befestigt, dass das Basiselement und das andere der beiden Deckelemente den Innenraum bilden.

Beispielsweise kann das Basiselement einen umlaufenden Flansch bilden und das andere der beiden Deckelemente, das heisst dasjenige Deckelement, das nicht Teil des Basiselements ist, kann entlang des umlaufenden Flansches am Basiselement befestigt sein.

Im Gegensatz zum Deckelement, das nicht Teil des Basiselements ist, ist oder wird das Deckelement, das Teil des Basiselements ist, in der Regel bereits bei dessen Ausformung mit der umlaufenden Seitenwand verbunden. Insbesondere kann das Basiselement aus einem Stück geformt sein.

In einer Ausführungsform weist das Basiselement die Wölbung auf. Das heisst, dasjenige Deckelement, das Teil des Basiselements ist, weist die Wölbung auf.

Das die Wölbung aufweisende Deckelement beziehungsweise das Basiselement, falls das die Wölbung aufweisende Deckelement ein Teil des Basiselements ist, kann in einer für die Herstellung von Portionenkapseln bekannten Art und Weise, insbesondere durch Spritzguss oder Tiefziehen, ausgeformt werden. Bei der Verwendung solcher Herstellungsverfahren wird die Herstellung einer erfindungsgemässen Portionenkapsel nicht oder zumindest nicht relevant aufwendiger oder teurer als die Herstellung von Portionenkapseln gemäss dem Stand der Technik, die nicht biologisch abbaubar sind, und sie wird einfacher und billiger als die Herstellung von biologisch abbaubaren Portionenkapseln, bei denen die für einen Einsatz bei einer Portionenkapsel nachteiligen physikalischen Eigenschaften nicht erfindungsgemäss kompensiert werden. Diese Aussage blei

Die Wölbung ist insbesondere eine Wölbung, die bei einer Betrachtung der Kapsel von aussen sichtbar ist.

Die Wölbung ist insbesondere eine Wölbung, die sich von einer Ebene, die von einem umlaufenden Übergangsbereich vom Deckelement, das die Wölbung aufweist, zur umlaufenden Seitenwand definiert wird, in Richtung des Innenraums erstreckt.

Die Zubereitung eines Brühgetränks unter Verwendung einer erfindungsgemässe Portionenkapsel findet in einer Getränkezubereitungsmaschine statt, die ein Brühmodul aufweist. Das Brühmodul umfasst ein erstes Brühmodulteil und ein relativ zu diesem bewegbares zweites Brühmodulteil, wobei durch das erste und zweite Brühmodulteil eine Brühkammer bildbar ist, welche die sich in einer Brühposition befindende Portionskapsel beim Brühvorgang mindestens teilweise umgibt. Das Brühmodul ist eingerichtet, durch das Einleiten einer Brühflüssigkeit in die Portionskapsel ein Brühgetränk zu brühen und dieses aus dem Brühmodul abzuleiten. Dazu weist das Brühmodul eine injektionsseitige Anstechvorrichtung und eine extraktionsseitige Anstechvorrichtung auf.

Bei Getränkezubereitungsmaschinen dieser Art gelangt eine in die offene Brühkammer eingelegte Portionenkapsel in die Brühposition, indem das zweite Brühmodulteil entlang einer Achse der Brühkammer auf das erste Brühmodulteil zubewegt wird. Bei Getränkezubereitungsmaschinen gemäss dem Stand der Technik tritt dadurch die injektionsseitige Anstechvorrichtung mit demjenigen Deckelement in Kontakt, über das die Brühflüssigkeit in die Portionenkapsel eingeleitete wird, und die extraktionsseitige Anstechvorrichtung tritt mit demjenigen Deckelement in Kontakt, über das das Brühgetränk abgeleitet wird. Beim in Kontakt treten übt die inj ektionsseitige Anstechvorrichtungen eine Kraft auf das entsprechende Deckelement aus, die dazu führt, dass eine (oder mehrere) injektionsseitige Anstechspitze das Deckelement durchstösst. Gleichzeitig übt zumindest eine extraktionsseitige Anstechspitze der extraktionsseitigen Anstechvorrichtung eine Kraft auf das entsprechende Deckelement aus, die zu einer Deformation des Deckelements führt, jedoch nicht zu dessen Durchstossung. Die Durchstossung selbst findet, zumindest bei hochwertigen Getränkezubereitungssystemen und darauf abgestimmten Portionenkapseln, erst dann statt, wenn ein für den Brühprozess geeigneter Druck im Innenraum vorherrscht. Andernfalls würde beispielsweise in einer ersten Phase des Zubereitungsprozesses ein Brühgetränk erzeugt, das qualitativ unzureichend ist, weil die für den Brühprozess benötigten Parameter, insbesondere Druck, Temperatur und Durchflussmenge, nicht im Innenraum vorherrschen und dennoch Brühgetränk aus der Portionenkapsel abgeleitet würde.

Wenn nun das Deckelement, über das das Brühgetränk abgeleitet wird, aus einem biologisch abbaubaren Material besteht, kann die Kraft, die beim Schliessen des Brühmoduls, das heisst beim Übergang der Portionenkapsel in die Brühposition, auftritt, dazu führen, dass das Deckelement, über welches das Brühgetränk abgeleitet wird, durchstossen wird. Dies ist deshalb der Fall, weil die physikalischen Eigenschaften des biologisch abbaubaren Materials, insbesondere seine Sprödigkeit, ein Aufreissen des Deckelements begünstigen.

Aufgrund dieses Sachverhalts bei der Zubereitung eines Brühgetränks unter Verwendung einer Portionenkapsel kann sich die Wölbung einer erfindungsgemässen Portionenkapsel insbesondere soweit in den Innenraum erstrecken, das heisst von der zuvor genannten Ebene wegerstrecken, dass die extraktionsseitige Anstechvorrichtung, insbesondere eine Anstechspitze derselben, das Deckelement im Bereich der Wölbung nicht durchstechen kann oder nicht in einem Ausmass durchstossen kann, wie es für die Ableitung des Brühgetränks nötig wäre. In anderen Worten kommt das Deckelement beim Übergang in die Brühposition nur mit dem in die Brühkammer ragende Endbereich der Anstechvorrichtung, beispielsweise nur mit dem in die Brühkammer ragende Endbereich der Anstechspitze in Kontakt, oder das Deckelement kommt mit der Anstechvorrichtung gar nicht in Kontakt, sondern diese kommt nur innerhalb der Wölbung zu liegen.

Bei einem auf eine erfindungsgemässe Portionenkapsel abgestimmten Verfahren zum Betrieb einer Getränkezubereitungsmaschine durchdringt die extraktionsseitige Anstechvorrichtung, insbesondere eine Anstechspitze desselben, das entsprechende Deckelement erst dann in einer für eine Ableitung eines Brühgetränks aus der Portionenkapsel geeignete Weise, wenn ein für den Brühprozess minimal benötigter Druck im Innenraum der Portionenkapsel anliegt, indem dieser Druck dafür sorgt, dass die Wölbung abflacht. In anderen Worten ist die Portionenkapsel und eine darauf abgestimmte Getränkezubereitungsmaschine, insbesondere dessen Brühmodul, eingerichtet, dass ein für eine Ableitung des Brühgetränks aus der Portionenkapsel geeignetes Durchstossen des Deckelements, welches zu Beginn die Wölbung aufweist, erst dann stattfindet, wenn ein für den Brühprozess minimal benötigter Druck im Innenraum der Portionenkapsel anliegt, indem dieser Druck dafür sorgt, dass die Wölbung abflacht.

Die Abflachung der Wölbung stellt eine Deformation desjenigen Deckelements dar, das vor dem Einlegen der Portionenkapsel in die Brühkammer die ursprüngliche Wölbung aufweist. Die Deformation kann über eine einfache Abflachung der Wölbung hinausgehen und beispielsweise Nachfolgendes umfassen: Ein Umklappen des Deckelements oder eines Teils davon und/oder das Ausbilden eines Sammelbereichs und/oder das Ausbilden einer Topografie, die ein Leiten des Brühgetränks zu einer Stelle, an der das Brühgetränk aus dem Kapselinnenraum abgeleitete wird, begünstigt.

Ob und wie weit das die Wölbung aufweisende Deckelement durchstossen wird, wenn sich die Portionenkapsel in der Brühposition befindet und der Brühprozess noch nicht gestartet wurde, kann von der gewählten Art und Weise abhängen, wie das Brühgetränk aus der Portionenkapsel abgeleitete wird:
- Falls die extraktionsseitige Ableitvorrichtung eingerichtet ist, das Brühgetränk über eine oder mehrere extraktionsseitige Anstechspitzen abzuleiten, indem diese einen ihr innenliegenden Kanal und eine oder mehrere Kanalöffnungen aufweist, über die das Brühgetränk in den untenliegenden Kanal gelangen kann, kann die extraktionsseitige Anstechspitze das Deckelement durchstossen, wobei die Anstechspitze nicht so weit in das Kapselinnere ragt, dass die Kanalöffnung im Kapselinneren zu liegen kommt.
   Natürlich kann auch bei einer extraktionsseitigen Anstechvorrichtung mit untenliegendem Kanal und Kanalöffnungen auf ein Durchstossen des Deckelements gänzlich verzichtet werden.
- Falls die extraktionsseitige Ableitvorrichtung eingerichtet ist, das Brühgetränk um die Anstechspitze oder Anstechspitzen herum abzuleiten, sollte die Wölbung und die extraktionsseitige(n) Anstechspitze(n) derart aufeinander abgestimmt sein, dass die extraktionsseitige(n) Anstechspitze(n) das Deckelement nicht oder nur rudimentär durchstösst (durchstossen).
- Falls die extraktionsseitige(n) Anstechspitze(n) nur dazu dient (dienen), die Kapsel zu öffnen, und ansonsten nicht direkt zur Ableitung des Brühgetränks beiträgt (beitragen), sollte die Wölbung und die extraktionsseitige(n) Anstechspitze(n) derart aufeinander abgestimmt sein, dass die extraktionsseitige(n) Anstechspitze(n) das Deckelement nicht durchstösst (durchstossen).

Ob und in welchem Ausmass die extraktionsseitige Anstechspitze das Deckelement durchstösst, welches die Wölbung aufweist, wenn sich die Portionenkapsel in der Brühposition befindet und der Brühprozess noch nicht gestartet wurde, hängt in der Regel von der Ausgestaltung der Wölbung und der extraktionsseitigen Anstechvorrichtung, insbesondere davon, wie weit die extraktionsseitige(n) Anstechspitze(n) in die Brühkammer ragt (ragen), ab.

Die Wölbung flacht sich insbesondere dann ab, wenn der Bereich des Deckelements, der die Wölbung ausmacht, sich in Richtung der Ebene, die von einem umlaufenden Übergangsbereich vom Deckelement, das die Wölbung aufweist, zur umlaufenden Seitenwand definiert wird, bewegt. In anderen Worten flacht die Wölbung insbesondere dann ab, wenn der Bereich des Deckelements, der die Wölbung ausmacht, sich in Richtung der Anstechvorrichtung bewegt.

Das Deckelement kann eingerichtet sein, dass die Abflachung erst bei einem bestimmten, im Innenraum anliegenden Druck einsetzt. Dies kann beispielsweise über mindestens eine der nachfolgenden Massnahmen realisiert sein: die Krümmung der Wölbung; die Dicke (Stärke) des Deckelements; das Material des Deckelements; ein Element, insbesondere ein Element des Deckelements, das bei einer bestimmten Krafteinwirkung von einem ersten Zustand in einen zweiten Zustand übergeht.

Die Abflachung kann zumindest in einem Teilbereich der ursprünglichen Wölbung in ein Umklappen der ursprünglichen Wölbung enden. Das heisst, zumindest ein Teilbereich des Deckelements, der Teil der ursprünglichen Wölbung war, kann nach der Abflachung gegen aussen, das heisst vom Innenraum weg gewölbt sein.

Die Abflachung kann teilweise oder vollständig durch ein im Innenraum angeordnetes Element der Portionenkapsel erfolgen, das eine Kraft auf das Deckelement ausüben kann.

In einer Ausführungsform weist die Portionenkapsel ein im Innenraum angeordnetes Filterelement auf, welches einen Extraktionsgutbereich vom ersten Deckelement oder vom zweiten Deckelement trennt, wobei dasjenige Deckelement, welches durch das Filterelement vom Extraktionsgutbereich getrennt ist, die in den Innenraum gerichtete Wölbung aufweist.

Das Filterelement kann derart im Innenraum angeordnet sein, dass es sich in Richtung des Deckelements, das die Wölbung aufweist, bewegen und eine Kraft auf dieses ausüben kann.

In einer Ausführungsform der Portionenkapsel mit Filterelement, weist die Portionenkapsel eine Positionierungsvorrichtung für das Filterelement auf, die relativ zum Filterelement derart angeordnet ist, dass eine Bewegung des Filterelements in Richtung des Deckelements, welches durch das Filterelement vom Extraktionsgutbereich getrennt ist, das heisst in Richtung des Deckelements, das die Wölbung aufweiset, nicht verhindert wird.

Die Positionierungsvorrichtung kann zusätzlich relativ zum Filterelement derart angeordnet sein, dass eine Bewegung des Filterelements in Richtung desjenigen Deckelements, welches durch das Filterelement nicht vom Extraktionsgutbereich getrennt ist, verhindert wird.

Ausführungsformen der Portionenkapsel mit Filterelement und optional mit Positionierungsvorrichtung für das Filterelement können zusätzlich mindestens eines der folgenden Merkmale aufweisen:
- Das Filterelement trennt den Extraktionsgutbereich von einem Sammelbereich, um zu verhindern, dass in unerwünschter Weise Extraktionsgut ins abgeleitete Brühgetränk gelangt.
   Der Sammelbereich kann durch das Deckelement, das zu Beginn des Zubereitungsprozesses die ursprüngliche Wölbung aufweist, und eine gegen dieses Deckelement gerichtete Fläche des Filterelements begrenzt sein.
   Das Deckelement, das zu Beginn des Zubereitungsprozesses die ursprüngliche Wölbung aufweist, kann auch nach der Abflachung der Wölbung, die optional durch eine Bewegung des Filterelements in Richtung des besagten Deckelements begleitet, verursacht oder mitverursacht wurde, eine Form aufweisen, die einen zwischen Filterelement und Deckelement liegenden Sammelbereich begrenzt.
- Das Filterelement kann ein Zentralelement aufweisen. Dieses kann beispielsweise einen Vorsprung des Filterelements zum Extraktionsgutbereich hin umfassen.
   Die Portionenkapsel kann derart ausgebildet sein, dass das Brühgetränk nur über das Zentralelement abgeleitet wird.
   Das Deckelement, das zu Beginn des Zubereitungsprozesses die ursprüngliche Wölbung aufweist, kann auch nach der Abflachung der Wölbung, die optional durch eine Bewegung des Filterelements in Richtung des besagten Deckelements begleitet, verursacht oder mitverursacht wurde, eine Form aufweisen, die einen zwischen Filterelement und Deckelement liegenden Sammelbereich erzeugt, der eine Zuführung des durch das Filterelement tretenden Brühgetränks zum Zentralelement ermöglich.
   Beispielsweise kann das Deckelement nach dessen Abflachen im Bereich des Zentralelements gegen aussen, das heisst in Richtung des angrenzenden Brühmodulteils, gewölbt sein.
   Alternativ oder ergänzend kann das Deckelement nach dessen Abflachen eine Topografie aufweisen, bei der das Filterelement nicht flächig auf dem Deckelement aufliegt und/oder bei der eine Zuführung des durch das Filterelement tretenden Brühgetränks zum Zentralelement begünstigt wird, beispielsweise, indem durch das Filterelement tretendes Brühgetränk zum Zentralelement hin geleitet wird.
   In Ausführungsformen, in denen das Filterelement das Zentralelement aufweist, kann das Zentralelement derart angeordnet sein, dass eine extraktionsseitige Anstechspitze beim Abflachen der Wölbung im Zentralelement zu liegen kommt.
   Beispielsweise kann die Portionenkapsel eine Längsachse aufweisen, die durch das erste und zweite Deckelement verläuft und um welche die Portionenkapsel im Wesentlichen rotationssymmetrisch ist.
   Scheitelpunkt der Wölbung und Zentralelement können dann entlang einer Achse angeordnet sein, die parallel zu besagter Längsachse verläuft.
   Nach dem Einbringen der Portionenkapsel in die Brühkammer kann ferner die Ansteckspitze entlang besagter Achse, die parallel zur Längsachse verläuft, angeordnet sein.
   Insbesondere in Ausführungsformen, in den die Portionenkapsel nur eine Wölbung aufweist, kann besagte Achse, die parallel zur Längsachse verläuft, die Längsachse selbst sein.
- Im Sammelbereich, kann eine Mehrzahl von Abstandhaltern angeordnet sein, die die Bewegung des Filterelements in Richtung des Deckelements, das zu Beginn die Wölbung aufweist, begrenzen.
- Die Portionenkapsel kann ein Verteilelement aufweisen. Diese ist im Innenraum angeordnet und begrenzt den Extraktionsgutbereich zu einer Injektionsseite hin, so dass ein Verteilbereich im Kapselinnern definiert wird.

Wie bereits erwähnt, kann sich die Portionenkapsel entlang einer Längsachse erstrecken, die eine Symmetrieachse der Portionenkapsel ist. In der Regel verläuft die Längsachse durch das erste und zweite Deckelement, beziehungsweise durch das Bodenelement und das Deckelelement, beziehungsweise durch die Fläche, die zwecks Extraktion und Injektion durchstossen wird.

Die Portionskapsel kann derart geformt sein, dass sie unter jedem Drehwinkel um die Längsachse rotationssymmetrisch ist.

Die Portionskapsel kann aber auch derart geformt sein, dass sie nur unter bestimmten Drehwinkeln, beispielsweise unter einem Drehwinkel von 90 oder 180 Grad, rotationssymmetrisch ist.

In einer Ausführungsform weist die Portionenkapsel eine rechteckige, insbesondere quadratische, Grundform aufweist.

Jede der zuvor und nachfolgend beschriebenen Ausführungsformen der Portionenkapsel kann eine der eben beschriebenen Grundformen aufweisen.

Die Portionenkapsel gemäss irgendeiner Ausführungsform kann Merkmale aufweisen, die Merkmalen der nachfolgend beschriebenen Getränkezubereitungsmaschine und/oder des nachfolgend beschriebenen Verfahrens entsprechen oder auf diese abgestimmt sind.

Die Erfindung betrifft ferner eine Getränkezubereitungsmaschine, die für einen Einsatz einer erfindungsgemässen Portionenkapsel in irgendeiner Ausführungsform optimiert ist.

Wie dem bisherigen zu entnehmen ist, weist die Getränkezubereitungsmaschine ein Brühmodul umfassend ein erstes Brühmodulteil und ein relativ zu diesem bewegbares zweites Brühmodulteil auf, wobei durch das erste und zweite Brühmodulteil eine Brühkammer bildbar ist, welche die sich in einer Brühposition befindende Portionskapsel beim Brühvorgang mindestens teilweise umgibt. Das Brühmodul ist eingerichtet, durch das Einleiten einer Brühflüssigkeit in die Portionskapsel ein Brühgetränk zu brühen und dieses über eine extraktionsseitige Anstechvorrichtung aus dem Brühmodul abzuleiten.

Die Brühkammer wird durch eine Wandung des ersten und/oder zweiten Brühmodulteils gebildet und eine extraktionsseitige Anstechspitze der extraktionsseitige Anstechvorrichtung ist in einer Vertiefung der Wandung angeordnet.

Durch diese Form der Brühkammer im Gebiet der extraktionsseitigen Anstechvorrichtung wird gewährleistet, dass die Wölbung des Deckelements der Portionenkapsel, das zu Beginn des Zubereitungsprozesses die ursprüngliche Wölbung aufweist, sich in einer Art und Weise deformieren kann, wobei die Deformation ein Abflachen der Wölbung umfasst, die ausschliesst, dass die Portionenkapsel während des Zubereitungsprozesses wieder in seine ursprüngliche, die ursprüngliche Wölbung aufweisende Form, oder eine vergleichbare Form zurückkehrt.

Insbesondere erlaubt die genannte Form der Brühkammer ein Umklappen der Wölbung von der in den Innenraum gerichteten Wölbung in eine in die Vertiefung der Wandung ragende Wölbung.

Ferner erlaubt die genannte Form der Brühkammer, dass das Deckelement nach dessen Deformation im Bereich der Ansteckspitze nach aussen ragt, womit sich auch bei Ausführungsformen der Portionenkapsel mit einem Filterelement, das sich in Richtung des Deckelements bewegen kann, das zu Beginn des Zubereitungsprozesses die ursprüngliche Wölbung aufweist, ein Sammelbereich bildet.

In Ausführungsformen weist die Getränkezubereitungsmaschine mindestens eines der nachfolgenden Merkmale auf:
- Die Wandung der Brühkammer, die bei eingelegter Portionenkapsel dem Deckelement, das zu Beginn des Zubereitungsprozesses die Wölbung aufweist, zugewandt ist, kann eine Topografie aufweisen, die das Ableiten des Brühgetränks begünstigt, falls das Deckelement nach seiner Formänderung diese Topografie übernimmt.
   Insbesondere kann die Topografie derart sein, dass das Filterelement nicht flächig auf dem Deckelement aufliegt und/oder dass eine Zuführung des durch das Filterelement tretenden Brühgetränks zu einem Zentralelement des Filterelements hin begünstigt wird, beispielsweise, indem durch das Filterelement tretendes Brühgetränk zum Zentralelement hin geleitet wird.
- Die extraktionsseitige Anstechspitze ragt über einen Rand der Vertiefung hinaus in die Brühkammer hinein. Das heisst, die extraktionsseitige Anstechspitze ist nicht in der Vertiefung versenkt, sondern steht aus dieser hervor.

Die Getränkezubereitungsmaschine gemäss irgendeiner Ausführungsform kann Merkmale aufweisen, die Merkmalen der Portionenkapsel und/oder des nachfolgend beschriebenen Verfahrens entsprechen oder auf diese abgestimmt sind.

Die Erfindung betrifft ferner ein Verfahren zum Betrieb einer Getränkezubereitungsmaschine unter Verwendung einer erfindungsgemässen Portionenkapsel.

Wie dem Bisherigen zu entnehmen ist, weist das Verfahren einen Schritt des zur Verfügungstellens einer erfindungsgemässen Portionenkapsel in irgendeiner Ausführungsform auf.

Wie ebenfalls dem bisher Offenbarten zu entnehmen ist, kann das Verfahren ferner einen oder mehrere der folgenden Schritte aufweisen:
- Einlegen der Portionenkapsel in eine Brühkammer der Getränkezubereitungsmaschine, wobei die Brühkammer durch ein erstes Brühmodulteil und ein relativ zu diesem bewegbares zweites Brühmodulteil gebildet wird.
- Schliessen der Brühkammer, indem das zweite Brühmodulteil relativ zum ersten Brühmodulteil bewegt wird.
   Dieser Schritt entspricht dem bereits erwähnten "Bringen der eingelegten Portionenkapsel in eine Brühposition, indem das zweite Brühmodulteil entlang einer Achse der Brühkammer auf das erste Brühmodulteil zubewegt wird".
   Der Schritt des Schliessens der Brühkammer kann folglich einen oder mehrere der folgenden Schritte auslösen:
   o In Kontakt bringen einer injektionsseitige Anstechvorrichtung mit demjenigen Deckelement, über das die Brühflüssigkeit in die Portionenkapsel eingeleitete wird.
      Ergänzend kann die injektionsseitige Anstechvorrichtung, insbesondere eine Anstechspitze desselben, das besagte Deckelement durchstossen.
      Die injektionsseitige Anstechvorrichtung, insbesondere eine Anstechspitze desselben, kann das besagte Deckelement in einer Art und Weise durchstossen, dass eine Brühflüssigkeit über die injektionsseitige Anstechvorrichtung in den Innenraum eingeleitet werden kann.
      Alternativ kann das Deckelement auch erst dann Durchstossen werden oder in einer für das Einleiten der Brühflüssigkeit geeigneten Weise durchstossen werden, nachdem feststeht, dass ein Brühgetränk unter Verwendung der eingelegten Portionenkapsel erzeugt werden soll. Dies kann beispielsweise eine Manipulation durch einen Benutzer voraussetzen.
   ∘ Positionieren einer extraktionsseitigen Ansteckspitze in einem von aussen zugänglichen Bereich der Wölbung.
      Dieser Schritt kann optional ein in Kontakt bringen der extraktionsseitigen Anstechspitze mit demjenigen Deckelement, das zu Beginn die ursprüngliche Wölbung aufweist, das heisst mit demjenigen Deckelement, über das das Brühgetränk aus der Portionenkapsel abgeleitet wird, umfassen.
      Der Schritt kann ferner optional ein Anstechen des Deckelements umfassen. Wie bereits erwähnt, umfasst der Schritt aber kein Durchstecken des Deckelements in einer Art und Weise, dass ohne weitere Schritte, insbesondere ohne Deformation der Wölbung, eine Flüssigkeit effizient aus der Portionenkapsel abgeleitet werden kann. Eine Ableitung wäre in diesem Zusammenhang effizient, wenn beispielsweise die Ableitung mit der Ableitung während der Zubereitung des Brühgetränks vergleichbar wäre und/oder wenn die Ableitung derart wäre, dass sie einen ausreichenden Druckaufbau im Innenraum verhindern würde und/oder wenn die Menge an Flüssigkeit, die in einer ersten Phase des Zubereitungsprozesses, in welcher im Innenraum noch nicht die für den Brühprozess benötigen Bedingungen vorherrschen, derart wäre, dass diese Menge einen merklichen Teil des letztlich erzeugten Brühgetränks ausmacht. In der Regel bilden bereits 2-3 Tropfen einen merklichen Teil des letztlich erzeugten Brühgetränks.
      In einer Ausführungsform wird die extraktionsseitigen Ansteckspitze in einem von aussen zugänglichen Bereich der Wölbung positioniert, ohne dass das Deckelement angestochen wird.
      Ergänzend kann das Deckelement durch die Positionierung der extraktionsseitigen Anstechspitze auch nicht deformiert werden.
      Ergänzend oder alternativ kommt das Deckelement mit der extraktionsseitigen Anstechvorrichtung, insbesondere dessen Anstechspitze, während des Schritts des Positionierens der extraktionsseitigen Ansteckspitze in einem von aussen zugänglichen Bereich der Wölbung nicht in Kontakt.
- Einleiten einer Brühflüssigkeit in den Innenraum der Portionenkapsel, wobei das Einleiten der Brühflüssigkeit ein Abflachen der in den Innenraum gerichteten Wölbung verursacht.
   Die Wölbung und dessen Abflachung kann wie in Zusammenhang mit der Portionenkapsel und der Getränkemaschine beschreiben sein.
   Das Einleiten der Brühflüssigkeit geschieht insbesondere über die inj ektionsseitige Anstechvorrichtung.
   Der Schritt des Einleitens einer Brühflüssigkeit in den Innenraum kann einen oder mehrere der folgenden Effekte auslösen, der/die die Abflachung der Wölbung verursachen können:
   ∘ Eine Erhöhung des Drucks im Innenraum.
   ∘ Eine Relativbewegung eines im Innenraum angeordneten Filterelements, welches einen Extraktionsgutbereich von demjenigen Deckelement trennt, welches die ursprüngliche Wölbung aufweist, wobei die Relativbewegung in Richtung des Deckelements ist, welches die Wölbung aufweist.
      Bei Ausführungsformen des Verfahrens, welche die besagte Relativbewegung aufweisen, ist die zur Verfügung gestellte Portionenkapsel insbesondere eine der zuvor beschriebenen Portionenkapsel mit im Innenraum angeordneten Filterelement.
   Die mit der Abflachung der Wölbung einhergehende Bewegung, beziehungsweise Verformung, des Deckelements oder eines Teils davon führt in vielen Ausführungsformen zu einer Relativbewegung zwischen dem besagten Deckelement oder dem besagten Teil davon und einer extraktionsseitige Anstechvorrichtung, insbesondere einer extraktionsseitigen Anstechspitze. Diese Relativbewegung entspricht einer Bewegung der extraktionsseitige Anstechvorrichtung in Richtung des Innenraums.
   In der Regel ist es das Deckelement oder ein Teil davon, das/der sich bewegt, während sich die extraktionsseitige Anstechvorrichtung, insbesondere dessen Anstechspitze, beispielsweise relativ zu anderen Teilen der Getränkezubereitungsmaschine, nicht bewegt.
   Insbesondere kann die Relativbewegung einer Bewegung der extraktionsseitige Anstechvorrichtung in Richtung des Innenraums entsprechen, weil sich das besagte Deckelement oder der besagte Teil davon gegen die Anstechvorrichtung hin bewegt. In anderen Worten kann die Relativbewegung einer Bewegung der extraktionsseitige Anstechvorrichtung in Richtung des Innenraums entsprechen, weil sich der Innenraum in Richtung der Anstechvorrichtung ausdehnt.

In einer Ausführungsform weist das Verfahren die oben genannten Schritte Einlegen der Portionenkapsel in eine Brühkammer, Schliessen der Brühkammer und Einleiten einer Brühflüssigkeit in den Innenraum der Portionenkapsel auf, wobei das Einleiten der Brühflüssigkeit ein Abflachen der in den Innenraum gerichteten Wölbung verursacht.

Beim Verfahren gemäss dieser Ausführungsform kann die Abflachung nur durch die Erhöhung des Drucks im Innenraum oder durch die Erhöhung des Drucks im Innenraum in Kombination mit der Relativbewegung des im Innenraum angeordneten Filterelements in Richtung des Deckelements, das zu Beginn die ursprüngliche Wölbung aufweist, beispielsweise wie oben beschrieben, verursacht werden.

Ergänzend oder alternativ kann beim Verfahren gemäss der zuvor genannten Ausführungsform die Abflachung der Wölbung die zuvor genannte Relativbewegung zwischen dem Deckelement, das zu Beginn des Verfahrens die ursprüngliche Wölbung aufweist, oder einem Teil davon und der extraktionsseitige Anstechvorrichtung, insbesondere einer extraktionsseitigen Anstechspitze, bewirken.

Das Verfahren gemäss irgendeiner Ausführungsform kann Merkmale aufweisen, die Merkmalen der Portionenkapsel und/oder der Getränkezubereitungsmaschine entsprechen oder auf diese abgestimmt sind.

Nachfolgend werden Ausführungsbeispiele der Erfindung anhand von Figuren beschrieben. Es zeigen:
- Fig. 1 eine beispielhaften Portionenkapsel nach dessen Einbringen in eine Brühkammer und dem Schliessen der Brühkammer im Querschnitt;
- Fig. 2 die Portionenkapsel gemäss Figur 1 während des Brühprozesses;
- Fig. 3 eine beispielhaften Portionenkapsel und ein auf die Portionenkapsel abgestimmtes Brühmodulteil nach dem Einbringen der Portionenkapsel in besagtes Brühmodulteil im Querschnitt; und
- Fig. 4 die Portionenkapsel und das Brühmodulteils gemäss Figur 3 während des Brühprozesses.

In den Figuren bezeichnen gleiche Bezugszeichen gleiche oder analoge Elemente.

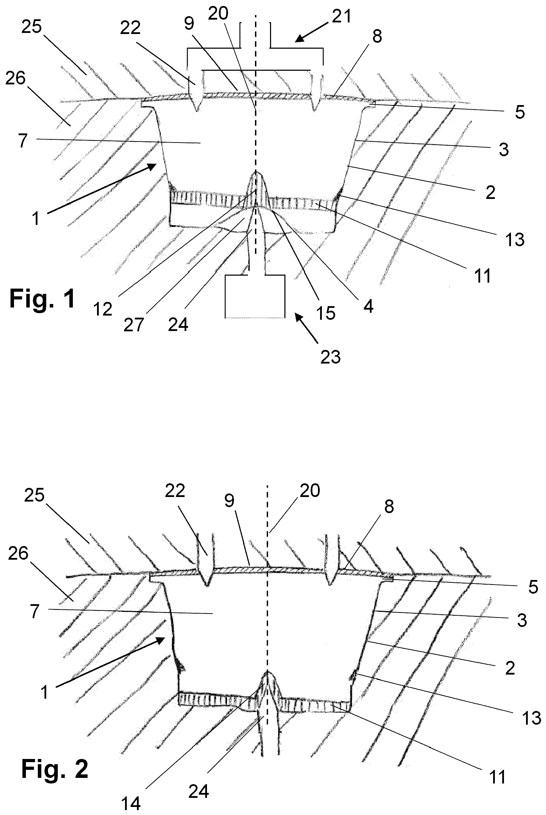

Die beispielhafte Portionenkapsel 1 gemäss **Figur 1** weist ein Basiselement 2 in Form eines Bechers auf. Das Basiselement wird durch eine umlaufende Seitenwand 3 und ein erstes Deckelement, das in der gezeigten Ausführungsform einen Kapselboden 4 bildet, geformt.

In der gezeigten Ausführungsform ist das Basiselement einstückig aus der umlaufenden Seitenwand 3 und dem Kapselboden 4 geformt.

Das Basiselement 2 weist einen umlaufenden Flansch 5 und ein daran befestigtes zweites Deckelement auf. Das zweite Deckelement ist in der gezeigten Ausführungsform ein Deckelelement 8.

Das Basiselement bildet zusammen mit dem durch das Deckelelement 8 gebildeten Deckel 9 eine äussere Kapselwand, die einen Kapselinnenraum 7 definiert.

Die Befestigung des Deckelelements 8 am Basiselement 2 kann auf eine an sich bekannte Art vorgenommen sein, bspw. durch Ultraschallschweissen, einem thermischen Verfahren oder eventuell durch Kleben.

In der gezeigten Ausführungsform wird ein im Kapselinnenraum 7 zubereitetes Brühgetränk über den Kapselboden abgeleitet. Entsprechend weist der Kapselboden 4 eine in den Innenraum 7 gerichtete Wölbung 15 auf und entsprechend ist zumindest der Kapselboden aus einem biologisch abbaubaren Material, beispielsweise aus einem Bio-Kunststoff, wie beispielsweise Terrablend, Arboblend oder PLA, oder aus einem anderen spröden Kunststoff.

Falls die Brühflüssigkeit über den Kapselboden 4 eingeleitet wird und das im Kapselinnenraum 7 zubereitete Brühgetränk über das Deckelelement 8 abgeleitet wird, weist das Deckelement 8 an Stelle des Kapselbodens 4 die Wölbung 15 und das biologisch abbaubare Material auf. Die nachfolgend beschriebenen Merkmale, die mit dem Ableiten des Brühgetränks verbunden sind, ändern sich entsprechend, wobei es sich insbesondere um Merkmale der Portionenkapsel 1 und/oder des Brühmoduls handeln kann.

In der gezeigten Ausführungsform ist die gesamte Portionenkapsel 1 aus einem biologisch abbaubaren Material gefertigt.

Die in Figur 1 gezeigte Portionenkapsel ist innerhalb einer Brühkammer gezeigt, die durch ein erstes Brühmodulteil 25 und ein relativ zu diesem beweglichen zweiten Brühmodulteil 26 gebildet wird. Die Brühkammer ist in geschlossenem Zustand gezeigt, das heisst, die Portionenkapsel 1 nimmt ihre Brühposition ein. Allerdings hat in der in Figur 1 gezeigten Konfiguration der Brühprozess noch nicht begonnen. Das heisst, es wurde noch keine Brühflüssigkeit in den Innenraum 7 eingeleitet.

In der gezeigten Ausführungsform ist die Brühkammer im Bereich der Wölbung 15 derart geformt, dass ein freier Raum 27, das heisst ein unausgefüllter Raum (Hohlraum) entsteht, wenn sich die Portionenkapsel in der Brühposition befinden und der Brühprozess noch nicht gestartet wurde. Dank diesem freien Raum 27 kann die Wölbung abflachen, wenn Brühflüssigkeit in den Innenraum 7 eingeleitet wird.

Insbesondere ist das zweite Brühmodulteil 26 derart geformt, dass der freie Raum 27 entsteht.

Die extraktionsseitige Anstechspitze 24 ist im freien Raum 27 angeordnet. Dadurch dringt die extraktionsseitige Anstechspitze 24 in den Innenraum 7 ein, sobald die Wölbung 15 abflacht.

In der gezeigten Ausführungsform weist das erste Brühmodulteil 25 eine injektionsseitige Anstechvorrichtung 21 mit mindestens einer injektionsseitigen Anstechspitze 22 und das zweite Brühmodulteil 26 eine extraktionsseitige Anstechvorrichtung 23 mit mindestens einer extraktionsseitigen Anstechspitze 24 auf.

Insbesondere bei Ausführungsformen mit einem im Innenraum 7 angeordneten Filterelement 11, wie in Figur 1 gezeigt, kann die extraktionsseitige Anstechvorrichtung 23 genau eine extraktionsseitigen Anstechspitze 24 aufweisen. Diese ist in der Regel entlang der Längsachse 20 der Portionenkapsel 1 angeordnet.

In der in Figur 1 gezeigten Ausführungsform weist die injektionsseitige Anstechvorrichtung 21 zwei injektionsseitige Anstechspitzen 22 auf. Mehr injektionsseitige Anstechspitzen 22 sind aber denkbar, beispielsweise drei oder vier. Die Anzahl injektionsseitiger Anstechspitzen 22 kann auf die Grundform abgestimmt sein. Es ist aber auch nur eine injektionsseitige Anstechspitze 22 denkbar. Dies kann insbesondere dann der Fall sein, wenn die Portionenkapsel 1 ein im Innenraum angeordnetes Verteilelement für die eingeleitete Brühflüssigkeit aufweist.

In der in Figur 1 gezeigten Ausführungsform sind das erste Brühmodulteil 25, insbesondere dessen injektionsseitige Anstechvorrichtung 21, und das zweite Brühmodulteil 26, insbesondere die extraktionsseitige Anstechvorrichtung 23, so auf die Form der Portionenkapsel 1 abgestimmt, dass die injektionsseitigen Anstechspitzen 22 das Deckenelement 8 durchstossen, während die extraktionsseitige Anstechspitze 24 in der Wölbung 15 des Kapselbodens 4 zu liegen kommt, den Kapselboden aber höchstens an- nicht aber durchstickt, wenn sich die Portionenkapsel 1 in der Brühposition befindet und der Brühprozess noch nicht gestartet wurde.

Eine Konfiguration, in denen die extraktionsseitige Anstechspitze 24 den Kapselboden 4, beziehungsweise das Deckelement, über das das Brühgetränk aus der Portionenkapsel abgeführt wird, nicht durchsticht ist insbesondere bei extraktionsseitigen Anstechvorrichtungen 23 von Vorteil, bei denen das Brühgetränk an der Anstechspitze 24 vorbei abgeführt wird. Das heisst bei Konfigurationen, bei denen die Anstechspitze oder Anstechspitzen 22 in erster Linie die Funktion des Anstechens haben, jedoch beispielsweise kein Ableiten über eine in ihrem Innern angeordnete Leitung. Insbesondere bei solchen Konfigurationen kann optional auf ein Zentralelement 12, wie nachfolgend beschrieben, verzichtet werden.

Eine Konfiguration, in denen die extraktionsseitige Anstechspitze 24 den Kapselboden 4, beziehungsweise das Deckelement, über das das Brühgetränk aus der Portionenkapsel abgeführt wird, nicht durchsticht ist auch bei extraktionsseitigen Anstechvorrichtungen 23 von Vorteil, bei denen die Anstechspitze oder Anstechspitzen 22 in erster Linie anreissen, um die Portionenkapsel auf der Extraktionsseite zu öffnen oder dessen Öffnung während des Brühprozesses zu initiieren, wobei die Anstechspitze(n) keine Funktion haben, die mit dem Ableiten der Brühflüssigkeit unmittelbar in Verbindung steht, beispielsweise durch ein Ableiten entlang ihrer Oberfläche(n) oder über eine in ihrem Innern angeordneten Leitung. Bei solchen Konfigurationen kann in der Regel auf ein Zentralelement 12, wie nachfolgend beschrieben, verzichtet werden.

Wie bereits erwähnt, weist die in Figur 1 gezeigte Portionenkapsel 1 ein Filterelement 11 auf. Dieses weist in der gezeigten Ausführungsform ein Zentralelement 12 auf. Dieses ist entlang der Längsachse 20 der Portionenkapsel 1 angeordnet und hat eine Grundform, die rotationssymmetrisch bezüglich der Längsachse 20 ist.

Die in Figur 1 gezeigte Portionenkapsel 1 ist ein Beispiel einer Portionenkapsel, bei der eine Bewegung des Filterelements 11 zur Wölbung 15 hin, zur Abflachung der Wölbung zumindest beiträgt. Deshalb weist die Portionenkapsel 1 in ihrem Innenraum 7 keine Struktur auf, die ein Bewegen des Filterelements 11 in Richtung Kapselboden 4 verhindert.

Allerdings können im Brühmodul, insbesondere in dessen Wandung, die dem Kapselboden zugewandt ist, Mittel vorgesehen sein, die sicherstellen, dass sich auch nach dem Bewegen des Filterelements 11 ein Sammelbereich 16 ausbildet.

In der gezeigten Ausführungsform wird ein ungewolltes Bewegen des Filterelements 11 gegen das Deckelelement 8 hin durch eine Positionierungsvorrichtung 13 in Form eines umlaufenden, in den Innenraum 7 ragenden Vorsprungs verhindert.

In **Figur 2** ist die Situation während des Brühprozesses, das heisst nach dem Starten desselben, gezeigt.

Das Einleiten der Brühflüssigkeit über die injektionsseitigen Anstechspitzen 22 hat dazu geführt, dass sich der Kapselboden 4 unter der Wirkung eines im Innenraum 7 erhöhten Drucks und unter der Wirkung einer vom Filterelement 11 auf die Wölbung 15 ausgeübten Kraft verformt hat. Insbesondere hat sich die Wölbung in Richtung der extraktionsseitigen Anstechspitze 24 hin abgeflacht, wodurch die extraktionsseitige Anstechspitze 24 in den Innenraum, genauer gesagt in das Zentralelement 12 des Filterelements 11, eingedrungen ist. Dadurch kann nun das Brühgetränk aus der Portionenkapsel 1 über das Zentralelement 12 und die extraktionsseitige Anstechspitze 24, beispielsweise über einem in der Anstechspitze 24 innenliegenden Kanal oder entlang der Anstechspitze 24, abgeleitet werden.

In Figur 2 nicht dargestellt ist der Sammelbereich 16, in dem sich das Brühgetränk nach dem Durchtritt durch das Filterelement 11 sammelt und dem Zentralelement 15 zugeführt wird.

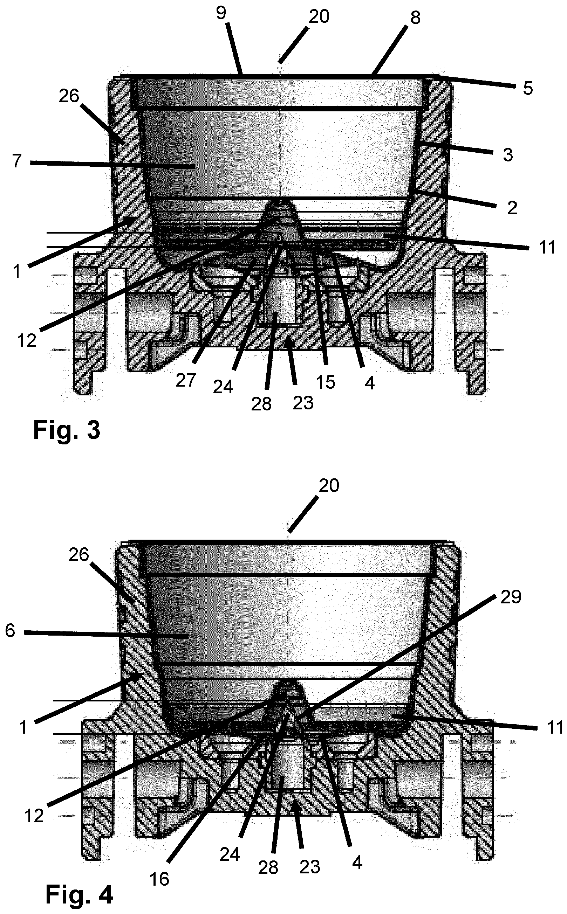

Die **Figuren 3 und 4** zeigen eine in eine Brühkammer eingebrachte Portionenkapsel 1 und ein auf die Portionenkapsel 1 abgestimmtes Brühmodulteil 26, die sich von der Konfiguration wie nachfolgend Beschrieben von der Konfiguration gemäss den Figuren 1 und 2 unterscheiden.

In den Figuren 3 und 4 wurde der injektionsseitige Teil der Brühkammer (das heisst das erste Brühmodulteil 25 in der gezeigten Ausführungsform) weggelassen.

Die Portionenkapsel 1 ist wiederum in der Brühposition befindlich gezeigt, wobei in der in Figur 3 gezeigten Konfiguration der Brühprozess noch nicht gestartet wurde und in der in Figur 4 gezeigten Konfiguration der Brühprozess läuft.

Die in den **Figuren 3 und 4** gezeigten Konfiguration unterscheidet sich insbesondere in folgenden Punkten von den in den Figuren 1 und 2 gezeigten Konfigurationen:
- Die extraktionsseitige Anstechspitze 24 ist in einer Vertiefung der Wandung der Brühkammer angeordnet. Dadurch kann die Wölbung 15 nicht nur abflachen, sondern sie kann von in den Innenraum 7 hineinragend (Figur 3) auf aus dem Innenraum 7 hinausragend (Figur 4) umklappen. Dadurch bildet sich, wie in Figur 4 gezeigt, auch nach der Verformung des Kapselbodens 4 und dem Bewegen des Filterelements 11 in Richtung des Kapselbodens 4 ein Sammelbereich 16 aus.
- Die extraktionsseitige Anstechvorrichtung 23 weist eine extraktionsseitige Anstechspitze 24 mit einem innenliegenden Kanal 28 und eine Kanalöffnung 29 im Bereich der Spitze der Anstechspitze 24 auf.
   Es versteht sich von selbst, dass die extraktionsseitige Anstechspitze 24 eine Vielzahl von Kanalöffnungen, die im innenliegenden Kanal 28 münden, aufweisen kann.
   Aufgrund dieses Aufbaus der extraktionsseitigen Anstechvorrichtung 23 und dem damit einhergehenden Ableiten des Brühgetränks durch den Kanal 28 der Anstechspitze 24, kann die Anstechspitze 24 den Kapselboden 4 bereits dann durchstossen, wenn die Portionenkapsel 1 in der Brühposition ist und der Brühprozess noch nicht gestartet wurde (Figur 3). Die Anstechspitze 24 darf einfach nicht soweit in den Innenraum 7 eindringen, dass die Kanalöffnung 29 im Innenraum zu liegen kommt, bevor im Innenraum die für den Brühprozess benötigten Bedingungen, insbesondere Druck und Temperatur, vorherrschen.
- Die extraktionsseitige Anstechspitze 24, insbesondere die Lage der Kanalöffnung 29 ist derart auf die Portionenkapsel 1 und die Form der Brühkammer abgestimmt, insbesondere auf die Form des Kapselbodens 4 nach dessen Verformung, dass sich die Kanalöffnung 29 nach der Verformung des Kapselbodens, das heisst während des Brühprozesses, in einem kanalbodenseitigen Endbereich des Zentralelements 12 befinden (Figur 4).

## Patentansprüche

1. Portionenkapsel (1) aufweisend eine umlaufenden Seitenwand (3), ein erstes Deckelement (4) und ein zweites Deckelement (8), wobei die umlaufende Seitenwand (3), das erste Deckelement (4) und das zweite Deckelement (8) einen geschlossenen Innenraum (7) bilden, **dadurch gekennzeichnet, dass** das erste Deckelement (4) oder das zweite Deckelement (8) eine in den Innenraum (7) gerichtete Wölbung (15) aufweist und dass das die Wölbung (15) aufweisende Deckelement aus einem biologisch abbaubaren Material gefertigt ist.

2. Portionenkapsel (1) gemäss Anspruch 1, aufweisend ein im Innenraum (7) angeordnetes Filterelement (11), welches einen Extraktionsgutbereich (6) vom ersten Deckelement (4) oder vom zweiten Deckelement (8) trennt, wobei dasjenige Deckelement, welches durch das Filterelement (11) vom Extraktionsgutbereich (6) getrennt ist, die in den Innenraum (7) gerichtete Wölbung (15) aufweist.

3. Portionenkapsel (1) gemäss Anspruch 2, aufweisend eine Positionierungsvorrichtung für das Filterelement (13), wobei die Positionierungsvorrichtung (13) relativ zum Filterelement (11) derart angeordnet ist, dass eine Bewegung des Filterelements (11) in Richtung desjenigen Deckelements, welches durch das Filterelement (11) vom Extraktionsgutbereich (6) getrennt ist, nicht verhindert wird.

4. Portionenkapsel (1) gemäss Anspruch 3, wobei die Positionierungsvorrichtung (13) relativ zum Filterelement (11) derart angeordnet ist, dass eine Bewegung des Filterelements (11) in Richtung desjenigen Deckelements, welches durch das Filterelement (11) nicht vom Extraktionsgutbereich (6) getrennt ist, verhindert wird.

5. Portionenkapsel (1) gemäss einem der Ansprüche 1-4, aufweisend ein Basiselement (2), das die umlaufende Seitenwand (3) und eines der beiden Deckelement umfasst, wobei das andere der beiden Deckelemente am Basiselement (2) befestigt ist und mit diesem zusammen den Innenraum (7) bildet.

6. Portionenkapsel (1) nach Anspruch 5, wobei das Basiselement (2) einen umlaufenden Flansch (5) bildet und das andere der beiden Deckelemente entlang des umlaufenden Flansches (5) am Basiselement (2) befestigt ist.

7. Portionenkapsel (1) gemäss einem der vorangehenden Ansprüche 1-6, wobei die Portionenkapsel eine rechteckige, insbesondere quadratische, Grundform aufweist.

8. Verfahren zum Betrieb einer Getränkezubereitungsmaschine aufweisend den Schritt
• Zur Verfügung stellen einer Portionenkapsel (1) gemäss einem der vorangehenden Ansprüche.

9. Verfahren gemäss Anspruch 8, aufweisend die Schritte:
• Einlegen der Portionenkapsel (1) in eine Brühkammer der Getränkezubereitungsmaschine, wobei die Brühkammer durch ein erstes Brühmodulteil (25) und ein relativ zu diesem bewegbares zweites Brühmodulteil (26) gebildet wird;
• Schliessen der Brühkammer, indem das zweite Brühmodulteil (26) relativ zum ersten Brühmodulteil (25) bewegt wird;
• Einleiten einer Brühflüssigkeit in den Innenraum (7) der Portionenkapsel;
wobei das Einleiten der Brühflüssigkeit die in den Innenraum (7) gerichtete Wölbung (15) abflacht.

10. Verfahren gemäss Anspruch 9, wobei die Abflachung der Wölbung durch mindestens einen der nachfolgenden Effekte verursacht wird:
• Einer Erhöhung des Drucks im Innenraum (7);
• Einer Relativbewegung eines im Innenraum angeordneten Filterelements, welches einen Extraktionsgutbereich (6) von demjenigen Deckelement trennt, welches die Wölbung (15) aufweist, wobei die Relativbewegung in Richtung des Deckelements ist, welches die Wölbung (15) aufweist.

11. Verfahren gemäss Anspruch 9 oder 10, wobei die mit der Abflachung einhergehende Bewegung des Deckelements oder eines Teils davon zu einer Relativbewegung zwischen dem besagten Deckelement oder dem besagten Teil davon und einer extraktionsseitige Anstechvorrichtung (24) führt, wobei die Relativbewegung einer Bewegung der extraktionsseitige Anstechvorrichtung (24) in Richtung des Innenraums (7) entspricht.

12. Verfahren nach Anspruch 11, wobei sich die extraktionsseitige Anstechvorrichtung (24) relativ in Richtung des Innenraums bewegt, weil sich das besagte Deckelement oder der besagte Teil davon gegen die Anstechvorrichtung hin bewegt.

13. Getränkezubereitungsmaschine zum Zubereiten eines Getränks aus einer Portionskapsel gemäss einem der Ansprüche 1-7, aufweisend ein Brühmodul umfassend ein erstes Brühmodulteil (25) und ein relativ zu diesem bewegbares zweites Brühmodulteil (26), wobei durch das erste und zweite Brühmodulteil eine Brühkammer bildbar ist, welche die sich in einer Brühposition befindende Portionskapsel beim Brühvorgang mindestens teilweise umgibt und welche durch eine Wandung des ersten und/oder zweiten Brühmodulteils gebildet wird, wobei das Brühmodul eingerichtet ist, durch das Einleiten einer Brühflüssigkeit in die Portionskapsel ein Brühgetränk zu brühen und dieses über eine extraktionsseitige Anstechvorrichtung aus dem Brühmodul abzuleiten;
**dadurch gekennzeichnet, dass** eine extraktionsseitige Anstechspitze der extraktionsseitige Anstechvorrichtung in einer Vertiefung der Wandung angeordnet ist.

14. Getränkezubereitungsmaschine nach Anspruch 13, wobei die extraktionsseitige Anstechspitze über einen Rand der Vertiefung hinaus in die Brühkammer hineinragt.
